# EUROPÄISCHE PATENTANMELDUNG

(11) **EP 0 978 369 A1**
(43) Veröffentlichungstag der Anmeldung: **09.02.2000**
(21) Anmeldenummer: 99112069.2
(22) Anmeldetag: 23.06.1999
(51) Int. Cl.: B29C 70/78, B29C 33/00

(54) **Verfahren und Vorrichtung zur Oberflächenbeschichtung eines Innenausbauteiles für Fahrzeuge sowie danach hergestelltes Innenausbauteil**

(30) Priorität: 05.08.1998 DE 19835280
(71) Anmelder: Behr Automotive GmbH, 73240 Wendlingen (DE)
(72) Erfinder: Berg, Matthias Dr., 72669 Unterensingen (DE); Hempel, Thomas, 71711 Steinheim (DE); Kupferer, Ralf, 70569 Stuttgart (DE)
(74) Vertreter: Hoeger, Stellrecht & Partner

(57) **Zusammenfassung**

Die Erfindung betrifft ein Verfahren und eine Vorrichtung zur Oberflächenbeschichtung eines Innenausbauteiles für Fahrzeuge. Das teilweise zu beschichtende Innenausbauteil wird in einen Hohlraum eines Formwerkzeuges (10) eingelegt, wobei die Hohlrauminnenwand vom Innenausbauteil im Bereich der zu beschichtenden Oberfläche des Innenausbauteiles einen definierten Abstand aufweist und dadurch zwischen der Innenwand und der zu beschichtenden Oberfläche einen sich über die gesamte zu beschichtende Oberfläche erstreckenden Spaltraum ausbildet. In den Spaltraum wird ein flüssiges Oberflächenbeschichtungsmaterial (36) eingefüllt und dort ausgehärtet. Um eine Nachbearbeitung insbesondere im Bereich von Funktionselementen des Innenausbauteiles zu vermeiden, wird vorgeschlagen, daß man den Spaltraum im Grenzbereich (A) zwischen der zu beschichtenden Oberfläche und der übrigen, nicht zu beschichtenden Oberfläche mittels eines Dichtungselementes (18) abdichtet. Außerdem wird ein unter Anwendung des voranstehend genannten Verfahrens hergestelltes Innenausbauteil vorgeschlagen.

## Beschreibung

Die vorliegende Erfindung betrifft eine Vorrichtung und ein Verfahren zur Oberflächenbeschichtung eines Innenausbauteiles für Fahrzeuge, bei dem man ein auf einem Teilbereich seiner Oberfläche zu beschichtendes Innenausbauteil in einen Hohlraum eines Formwerkzeuges einlegt, wobei die Hohlrauminnenwand vom Innenausbauteil im Bereich der zu beschichtenden Oberfläche des Innenausbauteiles einen definierten Abstand aufweist und dadurch zwischen der Innenwand und der zu beschichtenden Oberfläche einen sich über die gesamte zu beschichtende Oberfläche erstreckenden Spaltraum ausbildet, und bei dem man in den Spaltraum ein flüssiges Oberflächenbeschichtungsmaterial einfüllt und dort aushärtet.

Innenausbauteile mit einer beschichteten, zum Beispiel lakkierten Oberfläche werden verstärkt zur Innenausstattung von Kraftfahrzeugen verwendet. Hierbei kommen insbesondere Holzformteile zum Einsatz, die als massive Teile oder als Furnierteile ausgebildet sein können, wobei letztere meist auf ihrer Rückseite mit einem Verstärkungselement bspw. aus Kunststoff versehen werden. Auf die Sichtseite der Innenausbauteile wird in der Regel eine durchsichtige Lack- oder Harzschicht aufgebracht, so daß eine meist glänzende und strapazierfähige Oberfläche erzeugt wird und im Falle von Holzformteilen bei einer transparenten Oberflächenbeschichtung die Struktur des Holzes nicht nur sichtbar bleibt, sondern zusätzlich hervorgehoben wird. Hierzu wird das Holzformteil üblicherweise mit einer ca. 0,5 mm bis etwa 0,8 mm dicken Lackschicht versehen. Eine derartige Lackschicht hat eine optisch ansprechende "Tiefenwirkung" zur Folge.

Üblicherweise werden die Harze oder Lacke auf die zu beschichtenden Oberflächen aufgespritzt oder auflackiert. Im allgemeinen sind mehrere Lagen erforderlich, um die gewünschte Versiegelung und eine glänzende Oberfläche zu erhalten. Hierbei sind zur Erzielung einer einschlußfreien und möglichst gleichmäßigen Oberfläche besondere Vorsichtsmaßnahmen erforderlich. Besonders nachteilig ist es, daß das Aufsprühen oder Auflackieren meist eine Nachbehandlung erfordert, indem die aufgesprühte Lackschicht anschließend abgeschliffen und poliert werden muß, um die gewünschte Oberflächenqualität zu erzielen.

Anstatt das flüssige Oberflächenbeschichtungsmaterial auf das Innenausbauteil aufzusprühen oder aufzulackieren, wurde in der deutschen Patentschrift DE 43 20 893 C1 bereits vorgeschlagen, das Innenausbauteil in den Hohlraum eines Formwerkzeuges einzulegen, wobei die Hohlrauminnenwand vom Innenausbauteil im Bereich der zu beschichtenden Oberfläche einen definierten Abstand aufweist und dadurch zwischen der Innenwand und der zu beschichtenden Oberfläche einen sich über die gesamte zu beschichtende Oberfläche erstreckenden Spaltraum ausbildet. Bei dem bekannten Verfahren wird das flüssige Oberflächenbeschichtungsmaterial in den Spaltraum eingefüllt und dort ausgehärtet. Um sicherzustellen, daß in die Oberflächenschicht keine Gasblasen eingebettet werden, wird in der genannten Patentschrift vorgeschlagen, den Spaltraum zu evakuieren und das flüssige Oberflächenbeschichtungsmaterial während des Evakuierens oder danach in den Spaltraum einzufüllen. Soll das Innenausbauteil nicht allseitig auf seiner Oberfläche beschichtet werden, so wird in der DE 43 20 893 C1 vorgeschlagen, das Innenausbauteil bereichsweise flächig unmittelbar an die Innenwand des Hohlraumes anzulegen, so daß sich der Spaltraum nur über einen Teilbereich der Oberfläche des Innenausbauteiles erstreckt.

In vielen Fällen wird mittels des bekannten Verfahrens eine befriedigende Oberflächenqualität erzielt. Soll allerdings das Innenausbauteil nur teilweise beschichtet werden und bspw. auf seiner Rückseite ein unbeschichteter Bereich verbleiben, so kann bei dem bekannten Verfahren eine zeit- und kostenaufwendige Nachbehandlung erforderlich werden. Es hat sich nämlich herausgestellt, daß in vielen Fällen keine scharfe Trennlinie zwischen dem beschichteten Oberflächenbereich und dem unbeschichtenden Oberflächenbereich des Innenausbauteiles erzeugt werden kann. Dies ist insbesondere dann von Nachteil, wenn im unbeschichteten Bereich - also üblicherweise auf der Rückseite des Innenausbauteiles - Funktionselemente am Innenausbauteil angeordnet sind, bspw. Befestigungselemente zur Befestigung des Innenausbauteiles in einem Kraftfahrzeug. In vielen Fällen sind derartige Funktionselemente dem beschichteten Oberflächenbereich des Innenausbauteiles unmittelbar benachbart angeordnet, wobei deren Funktion durch das Vorliegen von ausgehärtetem Oberflächenbeschichtungsmaterial beeinträchtigt wird. Bei dem bekannten Verfahren muß deshalb in einigen Fällen nach dem Beschichtungsvorgang ausgehärtetes Oberflächenbeschichtungsmaterial im Bereich der Funktionselemente des Innenausbauteiles mechanisch entfernt werden.

Aufgabe der vorliegenden Erfindung ist es, das gattungsgemäße Verfahren derart weiterzubilden, daß eine Nachbearbeitung des beschichteten Innenausbauteiles im Bereich von Funktionselementen entfallen kann.

Diese Aufgabe wird bei einem Verfahren der eingangs genannten Art erfindungsgemäß dadurch gelöst, daß man den Spaltraum im Grenzbereich zwischen der zu beschichtenden Oberfläche und der übrigen, nicht zu beschichtenden Oberfläche des Innenausbauteiles mittels eines Dichtungselementee abdichtet.

Es hat sich gezeigt, daß mittels eines derartigen Dichtungselementes eine definierte Trennlinie zwischen dem beschichteten Oberflächenbereich und dem unbeschichteten Oberflächenbereich erzielt werden kann. Durch den Einsatz des Dichtungselementes kann zuverlässig verhindert werden, daß das flüssige Oberflächenbeschichtungsmaterial Oberflächenbereiche erreicht, die unbeschichtet verbleiben sollen. Dies ermöglicht es, bspw. Befestigungselemente unmittelbar dem zu beschichtenden Oberflächenbereich benachbart anzuordnen, zum Beispiel im Bereich der Kante des Innenausbauteiles.

Als flüssiges Oberflächenbeschichtungsmaterial kann bevorzugt ein Kunstharz auf Polyurethan-, Polyester-, Acryl- oder Epoxybasis verwendet werden. Diese Materialen sind im Gegensatz zu den beim üblichen Spritzgießen zum Einsatz kommenden zähflüssigen Kunststoffen eher dünnflüssig. Dies hat zur Folge, daß beim bekannten Verfahren nicht verhindert werden kann, daß das flüssige Oberflächenbeschichtungsmaterial auch die Oberflächenbereiche des Innenausbauteiles erreicht, die nicht beschichtet werden sollen und in denen das Innenausbauteil flächig an der Innenwand des Hohlraumes des Formwerkzeuges anliegt. Durch den Einsatz des Dichtungselementes kann dies zuverlässig verhindert werden.

Eine besonders scharfe und vorbestimmte Trennlinie zwischen dem beschichteten und dem unbeschichteten Oberflächenbereich des Innenausbauteiles kann dadurch erzielt werden, daß das Dichtungselement im wesentlichen linienförmig am Innenausbauteil anliegt. So ist es von Vorteil, wenn man das Innenausbauteil an eine das Innenausbauteil linienförmig kontaktierende Dichtlippe des Dichtungselementes anlegt. Eine flächige Anlage des Dichtungselementes am Innenausbauteil wird somit vermieden. Eine linienförmige Anlage hat eine besonders hohe Dichtwirkung zur Folge. Dies wiederum bewirkt eine besonders scharfe und vorbestimmbare Trennlinie zwischen dem beschichteten und dem unbeschichteten Oberflächenbereich.

Besonders vorteilhaft ist es, wenn man die Dichtlippe derart material- und/oder formelastisch ausbildet, daß sie sich beim Anlegen des Innenausbauteiles im wesentlichen senkrecht zur kontaktierenden Oberfläche des Innenausbauteiles verformt. Es wird somit eine tangentiale Ausweichbewegung der Dichtlippe vermieden; eine derartige Bewegung hätte eine unregelmäßige und nicht vorbestimmbare Trennlinie zur Folge.

Es kann vorgesehen sein, daß man als Material für das Dichtungselement Silikon, Butylkautschuk oder Neopren verwendet. Diese Materialien zeichnen sich zum einen durch eine hohe Elastizität aus und zum anderen wird dadurch ein Anhaften des Dichtungselementes am Innenausbauteil oder am Formwerkzeug vermieden. Der Einsatz der genannten Stoffe ist außerdem von Vorteil, wenn man das Formwerkzeug zum Aushärten des flüssigen Oberflächenbeschichtungsmaterials thermisch beaufschlagt. Auch eine derartige Erwärmung hat bei den genannten Materialien keine Beeinträchtigung der Elastizität des Dichtungselementes zur Folge.

Um eine tangentiale Ausweichbewegung der Dichtlippe beim Anlegen des Innenausbauteiles zu vermeiden, hat es sich als besonders günstig erwiesen, wenn man eine Dichtlippe mit einer gekrümmten Querschnittsform verwendet, insbesondere mit einer konvex-konkaven Querschnittsform.

Die Erfindung betrifft außerdem eine Vorrichtung zur Oberflächenbeschichtung eines Innenausbauteiles für Fahrzeuge mit einem einen Hohlraum ausbildenden Formwerkzeug, in den ein auf einem Teilbereich seiner Oberfläche zu beschichtendes Innenausbauteil einlegbar ist, wobei die Hohlrauminnenwand vom Innenausbauteil im Bereich der zu beschichtenden Oberfläche des Innenausbauteiles einen definierten Abstand aufweist und dadurch zwischen der Innenwand und der zu beschichtenden Oberfläche einen sich über die gesamte zu beschichtende Oberfläche erstreckenden Spaltraum ausbildet, und wobei in den Spaltraum ein flüssiges Oberflächenbeschichtungsmaterial einfüllbar und dort aushärtbar ist, insbesondere zur Durchführung des Verfahrens nach einem der voranstehenden Ansprüche.

Wie eingangs erwähnt, ist eine derartige Vorrichtung aus der deutschen Patentschrift DE 43 20 893 C1 bekannt. Wie erläutert, weist sie allerdings den Nachteil auf, daß insbesondere bei Einsatz dünnflüssiger Oberflächenbeschichtungsmaterialen nicht zuverlässig verhindert werden kann, daß das Oberflächenbeschichtungsmaterial beim Einfüllen in den Spaltraum Oberflächenbereiche des Innenausbauteiles erreicht, die nicht beschichtet werden sollen, insbesondere Bereiche, in den am Innenausbauteil Funktionselemente angeordnet sind. Bei Einsatz der bekannten Vorrichtung ist deshalb in vielen eine Nachbearbeitung zur mechanischen Entfernung von ausgehärtetem Oberflächenbeschichtungsmaterial im Bereich der Funktionselemente erforderlich.

Aufgabe der vorliegenden Erfindung ist es deshalb auch, eine Vorrichtung der voranstehend genannten Art derart weiterzubilden, daß eine zusätzliche Nachbearbeitung des beschichteten Innenausbauteiles im Bereich von Funktionselementen vermieden werden kann.

Diese Aufgabe wird bei einer Vorrichtung der voranstehend genannten Art erfindungsgemäß dadurch gelöst, daß das Formwerkzeug ein den Spaltraum im Grenzbereich zwischen der zu beschichtenden Oberfläche und der übrigen, nicht zu beschichtenden Oberfläche des Innenausbauteiles abdichtendes Dichtungselement umfaßt.

Eine besonders zuverlässig vorbestimmbare Trennlinie zwischen dem beschichteten und dem unbeschichteten Oberflächenbereich kann dadurch erzielt werden, daß das Dichtungselement im wesentlichen linienförmig am Innenausbauteil anliegt. So kann vorgesehen sein, daß das Dichtungselement eine das Innenausbauteil im wesentlichen linienförmig kontaktierende Dichtlippe umfaßt.

Beim Anlegen des Innenausbauteiles wird auf die Dichtlippe eine Druckbelastung ausgeübt, die eine Verformung der Dichtlippe zur Folge hat. Um sicherzustellen, daß eine derderartige Verformung keine unregelmäßige und nicht vorbestimmbare Trennlinie des beschichteten vom unbeschichteten Oberflächenbereich zur Folge hat, ist bei einer bevorzugten Ausgestaltung der erfindungsgemäßen Vorrichtung vorgesehen, daß die Dichtlippe derart material- und/oder formelastisch ausgebildet ist, daß sie sich beim Anlegen des Innenausbauteiles im wesentlichen senkrecht zur kontaktierenden Oberfläche des Innenausbauteiles verformt. Mittels einer derartigen Ausgestaltung der Dichtlippe wird eine merkliche tangentiale Ausweichbewegung verhindert.

Günstig ist es, wenn das Dichtungselement aus Silikon, Butylkautschuk oder Neopren gefertigt ist, da diese Materialien zum einen eine hohe Materialelastizität aufweisen und zum anderen temperaturbeständig sind und außerdem weder am Innenausbauteil noch am Formwerkzeug anhaften.

Zur Erzielung der voranstehend genannten Formelastizität hat sich insbesondere eine Dichtlippe mit gekrümmter Querschnittsform als günstig erwiesen, insbesondere eine Dichtlippe mit konvex-konkaver Querschnittsform.

Bei einer besonders bevorzugten Ausgestaltung der erfindungsgemäßen Vorrichtung ist vorgesehen, daß das Dichtungselement auswechselbar am Formwerkzeug gehalten ist. So kann bspw. vorgesehen sein, daß das Dichtungselement als Dichtring ausgestaltet ist, der in eine entsprechende Aufnahmenut am Formwerkzeug einlegbar ist, ohne daß hierzu zusätzliche Befestigungselemente zum Einsatz kommen müssen. Dies ermöglicht ein Auswechseln des Dichtungselementes innerhalb sehr kurzer Zeit.

Bevorzugt weist das Formwerkzeug der erfindungsgemäßen Vorrichtung eine Oberform und eine Unterform auf, die zur Ausbildung des Hohlraumes aufeinander aufsetzbar sind, und das Dichtungselement ist zwischen der Ober- und der Unterform angeordnet und dichtet den Spaltraum sowohl gegenüber dem nicht zu beschichtenden Oberflächenbereich des Innenausbauteiles als auch gegenüber der Unterform ab. Dadurch wird zuverlässig verhindert, daß das flüssige Oberflächenbeschichtungsmaterial zwischen der Oberform und der Unterform aus dem Spaltraum herausfließen kann. Das Dichtungselement weist somit eine doppelte Funktion auf, indem es zum einen sicherstellt, daß eine vorbestimmte Trennlinie zwischen dem beschichteten und dem unbeschichteten Oberflächenbereich des Innenausbauteiles erzielt wird und indem außerdem sichergestellt wird, daß das meist dünnflüssige Oberflächenbeschichtungsmaterial zwischen der Oberform und der Unterform, die zur Entnahme des beschichteten Innenausbauteiles voneinander trennbar sind, herausfließen kann.

Die Erfindung erstreckt sich nicht nur auf die voranstehend beschriebenen Verfahren und Vorrichtungen, sondern auch auf ein Innenausbauteil für Fahrzeuge, insbesondere ein Holzformteil, hergestellt mittels der beschriebenen Vorrichtung oder unter Anwendung des genannten Verfahrens.

Ein derartiges Innenausbauteil zeichnet sich durch eine vorbestimmte Trennlinie zwischen dem beschichteten und dem unbeschichteten Bereich aus, wobei die Trennlinie auch im Bereich der Kante des Innenausbauteiles verlaufen kann, z. B. unmittelbar einem Funktionsteil benachbart, das im Bereich der Kante des Innenausbauteiles angeordnet ist.

Die nachfolgende Beschreibung bevorzugter Ausführungsformen der Erfindung dient im Zusammenhang mit der Zeichnung der näheren Erläuterung. Es zeigen:
- Figur 1:: eine schematische Darstellung einer ersten Ausführungsform einer Vorrichtung zur Oberflächenbeschichtung eines Innenausbauteiles für Fahrzeuge;
- Figur 2:: eine vergrößerte Darstellung einer alternativen Ausgestaltung des Bereiches A aus Figur 1 gemäß einer zweiten Ausführungsform der Vorrichtung zur Oberflächenbeschichtung eines Innenausbauteiles für Fahrzeuge und
- Figur 3:: eine vergrößerte Darstellung einer weiteren alternativen Ausgestaltung des Bereiches A aus Figur 1 gemäß einer dritten Ausführungsform der Vorrichtung zur Oberflächenbeschichtung eines Innenausbauteiles.

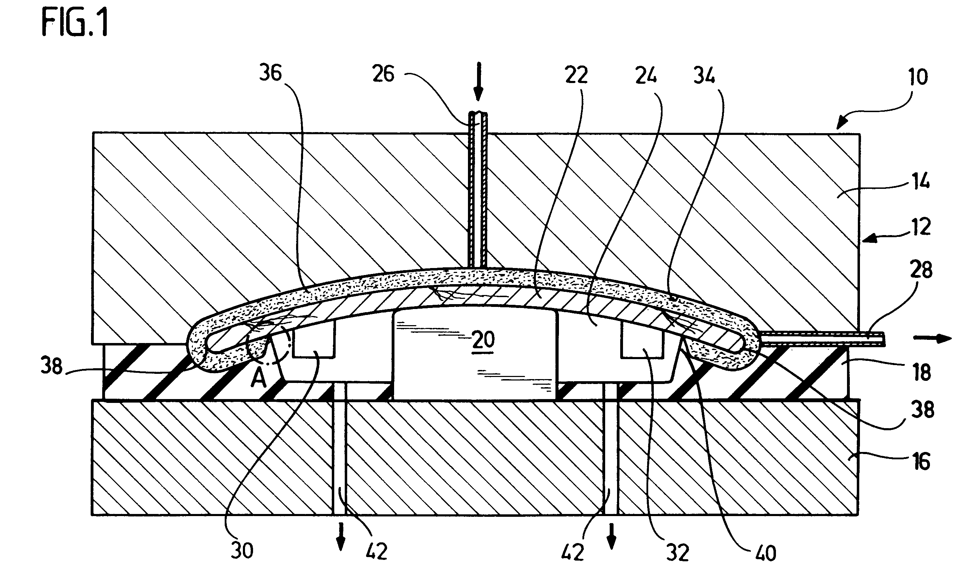

In Figur 1 ist schematisch eine erste Ausführungsform einer Vorrichtung zur Oberflächenbeschichtung eines Innenausbauteiles für Fahrzeuge dargestellt. Die Vorrichtung ist in Figur 1 mit dem Bezugszeichen 10 belegt und umfaßt im wesentlichen ein zweiteilig ausgestaltetes Formwerkzeug 12 mit einer Oberform 14 und einer Unterform 16, zwischen denen ein Dichtungselement in Form eines Dichtringes 18 angeordnet ist. Der Dichtring 18 umgibt ein Auflageteil 20, das auf der Unterform 16 aufsitzt und ein zu beschichtendes Innenausbauteil 22 in Form eines Holzfurnierteiles trägt. Das Innenausbauteil 22 ist in einen Hohlraum 24 eingelegt, der durch die Oberform 14 sowie den auf die Unterform 16 aufgesetzten Dichtring 18 und das Auflageteil 20 begrenzt wird.

Das Innenausbauteil 22 weist auf seiner der Unterform 16 zugewandten Rückseite zwei an sich bekannte und deshalb in der Zeichnung nur schematisch dargestellte Befestigungselemente 30, 32 auf, mit denen das Innenausbauteil nach seiner Entnahme aus dem Formwerkzeug 12 in einem Fahrzeug befestigt werden kann. Mit seiner Rückseite liegt das Innenausbauteil 22 teilweise flächig an der der Oberform zugewandten Oberseite des Auflageteiles 20 an. Im Bereich der der Oberform 14 zugewandten, zu beschichtenden Sichtseite des Innenausbauteiles 22 ist zwischen der Innenwand 34 des Hohlraumes 24 und der Oberfläche des Innenausbauteiles 22 ein Spaltraum 36 ausgebildet, der sich um die Kante 38 des Innenausbauteiles 22 herum bis in den rückwärtigen Bereich der Oberfläche des Innenausbauteiles 22 erstreckt. Die Dicke des Spaltraumes 36 kann bspw. zwischen 0,1 mm und 1,5 mm betragen, je nach gewünschter Dicke der Oberflächenbeschichtung, vorzugsweise beträgt die Dicke des Spaltraumes ca. 0,5 mm.

In den Spaltraum 36 kann über einen die Oberform 14 durchgreifenden Einfüllkanal 26 flüssiges Oberflächenbeschichtungsmaterial, bspw. ein Lack oder ein Harz, eingefüllt werden. Über einen Sauganschluß 28 kann der Spaltraum 36 vor oder während des Einfüllens des flüssigen Oberflächenbeschichtungsmaterials evakuiert werden. Zu diesem Zweck kann der Sauganschluß 28 zur Erzeugung eines Vakuums mit einer in der Zeichnung nicht dargestellten Pumpe verbunden werden.

Wie bereits erläutert, kommt vorzugsweise als Oberflächenbeschichtungsmaterial ein meist dünnflüssiger Lack oder ein Kunstharz auf Polyurethan-, Polyester-, Acryl- oder Epoxybasis zum Einsatz. Um zu verhindern, daß das dünnflüssige Oberflächenbeschichtungsmaterial aus dem Spaltraum 36 entweichen kann, ist der Dichtring 18 vorgesehen, der den Spaltraum 36 sowohl gegenüber der Unterform 16 als auch gegenüber dem übrigen, nicht zu beschichtenden Oberflächenbereich des Innenausbauteiles 22 abdichtet. Durch den Dichtring 18 wird verhindert, daß das flüssige Oberflächenbeschichtungsmaterial den Bereich der Befestigungselemente 30, 32 erreichen kann. In dem der Kante 38 benachbarten Bereich weist der Dichtring 18 eine der Form des Innenausbauteiles 22 entsprechende Form auf und ist im Abstand zum Innenausbauteil 22 angeordnet. Um den Spaltraum in Richtung des nicht zu beschichtenden, rückwärtigen Oberflächenbereiches des Innenausbauteiles 22 abzudichten, weist der Dichtring 18 eine Dichtlippe 40 auf, die sich im wesentlichen linienförmig an das Innenausbauteil 22 anlegt. Die Höhe der Dichtlippe ist hierbei derart an die Höhe des Auflageteiles 20 und die Form des Innenausbauteiles 22 angepaßt, daß sichergestellt wird, daß die Dichtlippe praktisch nicht in tangentialer Richtung der Oberfläche des Innenausbauteiles 22 verformt wird, wenn das Innenausbauteil 22 auf das Auflageteil 20 und die Dichtlippe 40 aufgesetzt wird. Es wird somit eine definierte, linienförmige Anlage der Dichtlippe 40 sichergestellt, und dies hat wiederum eine definierte Trennlinie zwischen dem Spaltraum 36, d. h. dem beschichteten Oberflächenbereich des Innenausbauteiles 22, und dem unbeschichteten Oberflächenbereich des Innenausbauteiles 22 zur Folge.

Zur Beschichtung des Innenausbauteiles 22 kann die Oberform 14 vom Dichtring 18 und der Unterform 16 abgehoben und dadurch das Innenausbauteil 22 auf das Auflageteil 20 aufgelegt werden. Anschließend wird die Oberform 14 auf die Unterform 16 aufgesetzt und dadurch der Hohlraum 24 geschlossen. Um sicherzustellen, daß das auf das Auflageteil 20 aufgesetzte Innenausbauteil 22 innerhalb des Hohlraumes 24 eine definierte Ausrichtung einnimmt und beibehält, kann der Hohlraum 24 im rückwärtigen Bereich des Innenausbauteiles 22 evakuiert werden. Hierzu sind zwei die Unterform 16 durchgreifende Absaugkanäle 42 vorgesehen, die zur Erzeugung eines Vakuums mit einer in der Zeichnung nicht dargestellten Pumpe verbunden werden können. Das Innenausbauteil 22 wird aufgrund des erzeugten Vakuums zuverlässig am Auflageteil 20 gehalten. Hierbei hat es sich als vorteilhaft erwiesen, daß der Dichtring 18 nicht nur den Spaltraum 36 gegenüber der Unterform 16 und dem nicht zu beschichtenden, rückwärtigen Bereich des Innenausbauteiles 22 abdichtet, sondern daß der Dichtring 18 auch den das Auflageteil 20 umgebenden, rückwärtigen Bereich des Hohlraumes 24 abdichtet, so daß sich dieser zur Herstellung eines Vakuums zuverlässig über die Absaugkanäle 42 absaugen läßt. Hierbei ist für den das Auflageteil 20 umgebenden Bereich ein größeres Vakuum, d. h. ein größerer Unterdruck, vorgesehen als für den Spaltraum 36, der, wie voranstehend erläutert, ebenfalls evakuiert werden kann. Durch die unterschiedlichen Unterdrücke wird sichergestellt, daß das Innenausbauteil 22 auch während des Absaugens des Spaltraumes 36 zuverlässig am Auflageteil 20 gehalten werden kann. Alternativ kann auch eine mechanische Halte- oder Spannvorrichtung vorgesehen sein, mittels derer das Innenausbauteil 22 am Auflagetei 20 gehalten und vorzugsweise mit diesem verspannt werden kann.

Nachdem das Innenausbauteil 22 in den Hohlraum 24 eingelegt wurde, wird der Spaltraum 36 über den Sauganschluß 28 evakuiert, und über den Einfüllkanal 26 wird flüssiges Oberflächenbeschichtungsmaterial in den Spaltraum 36 eingefüllt. Das Oberflächenbeschichtungsmaterial verteilt sich gleichmäßig innerhalb des Spaltraumes 36, wobei mittels der Dichtlippe 40 zuverlässig verhindert wird, daß das Oberflächenbeschichtungsmaterial nicht zu beschichtende Oberflächenbereiche des Innenausbauteiles 22 erreichen kann. Der Spaltraum 36 wird vollständig und homogen mit flüssigem Oberflächenbeschichtungsmaterial ausgefüllt. Das Formwerkzeug 12 wird erwärmt, so daß das Oberflächenbeschichtungsmaterial in kurzer Zeit aushärtet. Alternativ und/oder ergänzend kann auch vorgesehen sein, daß das flüssige Oberflächenbeschichtungsmaterial UV-strahlungsempfindliche Sensibilisatoren aufweist und daß man das flüssige Oberflächenbeschichtungsmaterial während des Aushärtens mit UV-Strahlung beaufschlagt. Diese kann bspw. mittels eines Lichtleiters in den Spaltraum 36 eingekoppelt werden.

Nach dem Aushärten wird das Formwerkzeug 12 geöffnet, indem die Oberform 16 abgenommen wird. Das beschichtete Innenausbauteil 22 kann nunmehr dem Hohlraum 24 entnommen werden. Eine weitere Bearbeitung der Oberfläche des Innenausbauteiles ist anschließend nicht erforderlich, durch entsprechende Oberflächengüte der Innenwand 34 des Formwerkzeuges 12 wird vielmehr sichergestellt, daß die Sichtseite des Innenausbauteiles 22 eine hochglänzende Oberfläche aufweist, wobei durch die gewählte Dicke des Spaltraumes 36 eine "Tiefenwirkung" der hochtransparenten Oberflächenschicht zustande kommt. Auch eine Nachbearbeitung des beschichteten Innenausbauteiles 22 dergestalt, daß überschüssiges ausgehärtetes Oberflächenbeschichtungsmaterial im Bereich der Befestigungselemente 30 und 32 entfernt werden muß, ist nicht erforderlich. Vielmehr wird durch die Dichtlippe 40 zuverlässig sichergestellt, daß der beschichtete Oberflächenbereich des Innenausbauteiles 22 eine definierte Trennlinie gegenüber dem unbeschichteten, rückwärtigen Bereich aufweist.

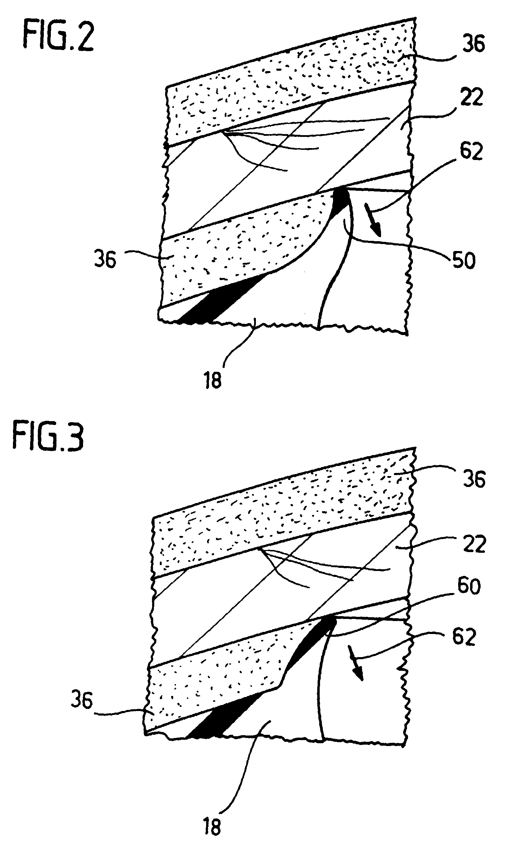

Bei der in Figur 1 dargestellten Ausführungsform der erfindungsgemäßen Vorrichtung weist die Dichtlippe 40 eine im wesentlichen dreieckförmige Querschnittsfläche auf. Alternative Ausgestaltungen der Dichtlippe 40 sind in den Figuren 2 und 3 dargestellt. Diese betreffen Ausführungsformen der Vorrichtung 10, die sich lediglich durch eine andere Ausgestaltung der Dichtlippe 40 auszeichnen. Es wurden deshalb für diese Ausführungsformen die gleichen Bezugszeichen verwendet wie für die Vorrichtung gemäß Anspruch 1. Die in den Figuren 2 und 3 dargestellten Ausführungsformen zeichnen sich durch Dichtlippen 50 bzw. 60 mit gekrümmter Querschnittsfläche aus. Hierbei weist die in Figur 2 dargestellte Dichtlippe 50 auf ihrer dem Spaltraum 36 zugewandten Innenseite eine konkave Krümmung auf, während sie auf ihrer dem Spaltraum 36 abgewandten Außenseite konvex gekrümmt ist. Die in Figur 3 dargestellte Dichtlippe 60 weist demgegenüber eine dem Spaltraum 36 zugewandte konvexe Innenseite und eine dem Spaltraum 36 abgewandte konkave Außenseite auf. In beiden Fällen wird durch die gekrümmte Ausgestaltung der Dichtlippen 50 und 60 sichergestellt, daß sich diese beim Aufsetzen des Innenausbauteiles 22 im wesentlichen lediglich senkrecht zur kontaktierenden Oberfläche des Innenausbauteiles 22 verformen, wie dies in den Figuren 2 und 3 durch den Pfeil 62 angedeutet ist. Unterstützt wird diese Formelastizität der Dichtlippen 50, 60 durch die Verwendung von Silikon als Dichtringmaterial, das sich durch eine gute Materialelastizität auszeichnet. Die Formelastizität aufgrund der Krümmung und die Materialelastizität aufgrund des Einsatzes des Silikons hat zur Folge, daß sich die Dichtlippen 50 und 60 beim Aufsetzen des Innenausbauteiles 22 praktisch nicht tangential verformen. Dies wiederum bewirkt eine definierte und vorbestimmbare Trennlinie zwischen dem beschichteten und dem unbeschichteten Bereich des Innenausbauteiles 22.

## Patentansprüche

1. Verfahren zur Oberflächenbeschichtung eines Innenausbauteiles für Fahrzeuge, bei dem man ein auf einem Teilbereich seiner Oberfläche zu beschichtendes Innenausbauteil in einen Hohlraum eines Formwerkzeuges einlegt, wobei die Hohlrauminnenwand vom Innenausbauteil im Bereich der zu beschichtenden Oberfläche des Innenausbauteiles einen definierten Abstand aufweist und dadurch zwischen der Innenwand und der zu beschichtenden Oberfläche einen sich über die gesamte zu beschichtende Oberfläche erstreckenden Spaltraum ausbildet, und bei dem man in den Spaltraum ein flüssiges Oberflächenbeschichtungematerial einfüllt und dort aushärtet, dadurch gekennzeichnet, daß man den Spaltraum im Grenzbereich zwischen der zu beschichtenden Oberfläche und der übrigen, nicht zu beschichtenden Oberfläche des Innenausbauteiles mittels eines Dichtungselementes abdichtet.

2. Verfahren nach Anspruch 1, dadurch gekennzeichnet, daß man das Dichtungselement im wesentlichen linienförmig an das Innenausbauteil anlegt.

3. Verfahren nach Anspruch 1 und 2, dadurch gekennzeichnet, daß man das Innenausbauteil an eine das Innenausbauteil ungefähr linienförmig kontaktierende Dichtlippe des Dichtungselementes anlegt.

4. Verfahren nach Anspruch 3, dadurch gekennzeichnet, daß man die Dichtlippe derart material- und/oder formelastisch ausbildet, daß sie sich beim Anlegen des Innenausbauteiles im wesentlichen senkrecht zur kontaktierenden Oberfläche des Innenausbauteiles elastisch verformt.

5. Verfahren nach Anspruch 3 oder 4, dadurch gekennzeichnet, daß man eine Dichtlippe mit einer gekrümmten Querschnittsform, insbesondere mit einer konvex-konkaven Querschnittsform verwendet.

6. Verfahren nach einem der voranstehenden Ansprüche, dadurch gekennzeichnet, daß man als Material für das Dichtungselement Silikon, Butylkautschuk oder Neopren verwendet.

7. Vorrichtung zur Oberflächenbeschichtung eines Innenausbauteiles für Fahrzeuge mit einem einen Hohlraum ausbildenden Formwerkzeug, in den ein auf einem Teilbereich seiner Oberfläche zu beschichtendes Innenausbauteil einlegbar ist, wobei die Hohlrauminnenwand vom Innenausbauteil im Bereich der zu beschichtenden Oberfläche des Innenausbauteiles einen definierten Abstand aufweist und dadurch zwischen der Innenwand und der zu beschichtenden Oberfläche einen sich über die gesamte zu beschichtende Oberfläche erstreckenden Spaltraum ausbildet, und wobei in den Spaltraum ein flüssiges Oberflächenbeschichtungsmaterial einfüllbar und dort aushärtbar ist, insbesondere zur Durchführung des Verfahrens nach einem der voranstehenden Ansprüche, dadurch gekennzeichnet, daß das Formwerkzeug (12) ein den Spaltraum (36) im Grenzbereich zwischen der zu beschichtenden Oberfläche und der restlichen, nicht zu beschichtenden Oberfläche des Innenausbauteiles (22) abdichtendes Dichtungselement (18) umfaßt.

8. Vorrichtung nach Anspruch 7, dadurch gekennzeichnet, daß das Dichtungselement (18) im wesentlichen linienförmig am Innenausbauteil (22) anliegt.

9. Vorrichtung nach Anspruch 7 und 8, dadurch gekennzeichnet, daß das Dichtungelement (18) eine das Innenausbauteil (22) ungefähr linienförmig kontaktierende Dichtlippe (40; 50; 60) umfaßt.

10. Vorrichtung nach Anspruch 9, dadurch gekennzeichnet, daß die Dichtlippe (40; 50; 60) derart material- und/oder formelastisch ausgebildet ist, daß sie sich beim Anlegen des Innenausbauteiles (22) im wesentlichen senkrecht zur kontaktierenden Oberfläche des Innenausbauteiles (22) elastisch verformt.

11. Vorrichtung nach Anspruch 9 oder 10, dadurch gekennzeichnet, daß die Dichtlippe (40; 50) eine gekrümmte Querschnittsform, insbesondere eine konvex-konkave Querschnittsform, aufweist.

12. Vorrichtung nach einem der Ansprüche 7 bis 11, dadurch gekennzeichnet, daß das Dichtungselement (18) aus Silikon, Butylkautschuk oder Neopren gefertigt ist.

13. Vorrichtung nach einem der Ansprüche 7 bis 12, dadurch gekennzeichnet, daß das Dichtungselement (18) auswechselbar am Formwerkzeug (12) gehalten ist.

14. Vorrichtung nach einem der Ansprüche 7 bis 13, dadurch gekennzeichnet, daß das Formwerkzeug (12) eine Oberform (14) und eine Unterform (16) aufweist, die zur Ausbildung des Hohlraumes (24) aufeinander aufsetzbar sind, und daß das Dichtungselement (18) zwischen der Ober- und der Unterform (14 bzw. 16) angeordnet ist und den Spaltraum (36) sowohl gegenüber dem nicht zu beschichtenden Oberflächenbereich des Innenausbauteiles (22) als auch gegenüber der Unterform (16) abdichtet.

15. Innenausbauteil für Fahrzeuge, insbesondere Holzformteil, mit einem ersten, mit einem Oberflächenbeschichtungsmaterial beschichteten Oberflächenbereich und einem zweiten, unbeschichteten Oberflächenbereich, hergestellt mittels der Vorrichtung gemäß einem der Ansprüche 7 bis 14 oder unter Anwendung des Verfahrens gemäß einem der Ansprüche 1 bis 6.
